(19) **Europäisches Patentamt**
**European Patent Office**
**Office européen des brevets**

(11) **EP 1 998 544 A1**

(12) **EUROPEAN PATENT APPLICATION**

(43) Date of publication:
**03.12.2008 Bulletin 2008/49**

(51) Int Cl.:
***H04N 1/00*** *(2006.01)*     ***B41J 2/00*** *(2006.01)*

(21) Application number: **07425338.6**

(22) Date of filing: **01.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Andromeda S.r.l.**
**81020 S. Marco Evangelista (CE) (IT)**

(72) Inventor: **Enea, Roberto**
**81100 Caserta (IT)**

(74) Representative: **Leone, Mario et al**
**Studio Associato Leone & Spadaro**
**Viale Europa, 15**
**00144 Roma (IT)**

(54) **Exposure head with a high number of laser beams**

(57)     In an exposure head having a high number of laser beams generating helices on the surface of a photosensitive plate arranged on the outer surface of a rotating cylindrical drum, the helices obtained by all the laser beams never overlap to each other and, at the same time, without leaving non-exposed spaces, in that helix pitch is intended as the shifting of the exposure head on a respective linear guide for each drum rotation; spot is intended as the photosensitive plate surface exposed to a single laser beam; pitch is intended as the distance between two spots generated by two adjacent laser beams; discretized pitch is intended as the ratio between pitches and the spot distance for having a determined exposure resolution, where the product of said spot distance and the number of the spots generated by the head is equal to the helix pitch; and wherein the discretized pitch and the number of the head laser beams are coprime, i.e. they have no common factor other than the number one.

EP 1 998 544 A1

## Description

The present invention is related to an exposure head, of the type usable in an image forming device, e.g. in the field of the printing of plates aimed to be used in lithography processes, wherein the printed image on the plate is transferred and reproduced on other media, using the plate as master.

Specifically, the invention is referred to a head having a high number of laser sources or anyway apt to emit a high number of laser beams. The laser beams are projected on plates coated with a technopolymer photosensitive to the beam wavelength.

In this kind of exposure head, the difficulty in projecting such a high number of beams, at the same time achieving a high writing speed, is felt. The beams engrave on the external surface of a cylindrical drum, substantially covered by a photosensitive plate and rotated at high rotation rate.

In turn, the head is translated along a longitudinal direction, i.e. parallel to the drum axis, thereby the beams engrave on the drum about orthogonally, generating one helix on the plate for each laser source.

For a correct engraving, the plate surface has to be fully affected by said laser beams, but at the same time the helices must not overlap one to each other. This task is difficult to achieve when the number of sources is high.

The technical problem underlying the present invention is to provide an exposure head allowing to obviate the drawbacks mentioned with reference to the prior art.

Such a problem s solved by an exposure head as above specified, having a high number of laser beams generating helices on the surface of a photosensitive plate arranged on the outer surface of a rotating cylindrical drum, wherein:

* helix pitch is intended as the shifting of the exposure head on a respective linear guide for each drum rotation;

* spot is intended as the photosensitive plate surface exposed to a single laser beam;

* pitch is intended as the distance between two spots generated by two adjacent laser beams;

* discretized pitch is intended as the ratio between pitches and the spot distance for having a determined exposure resolution, where the product of said spot distance and the number of the spots generated by the head is equal to the helix pitch;

and wherein the discretized pitch and the number of the head laser beams are coprime, i.e. they have no common factor other than the number one.

The main advantage of the exposure head according to the present invention lies in that the helices obtained by all the laser beams never overlap to each other and, at the same time, without leaving non-exposed spaces.

The present invention will be disclosed hereinafter according to a preferred embodiment thereof, provided for an exemplificative and non-limitative purpose.

The head of the present embodiment is used for printing a photosensitive plate arranged on the outer surface of a cylindrical drum which is driven in rotation, with the head translating along a direction parallel to the drum axis.

The head projects a plurality of laser beams on the plate surface, resulting from a high number of laser sources or by the scrambling of a sole beam into a multiplicity of beams.

In both cases, the laser beams produce a multiplicity of helices on the plate, therealong the data to be printed are transferred. It is intended that it is of the greatest importance to prevent the overlapping of these helices, the latter being able to thwart the whole exposure of the plate and the loss thereof.

In this connection, the following definitions apply:

Line clock is intended ad a pulse train generated by a data feeder through the zoom of the signals coming from an angular encoder mounted on the cylindrical drum. The zoom has to be such that to determine a discretization of 10 $\mu$m of the surface of the drum itself.

The helix pitch is defined as the shifting, expressed in mm, of the exposure head along a respective linear guide for each 360° rotation of the cylindrical drum.

This value depends upon the number of the spots exposed by the head at each line clock.

Spot is defined as the plate surface exposed to a single laser beam.

In case of beams resulting from an monolithic laser diode array, each diode produce one spot on the plate. An exemplificative number of laser diodes may be 64. Such a structure is typical within the laser beams in the infrared field.

If the laser beams result from the deflection of a single beam, a particular deflection angle of the laser beam corresponds to each exposed spot along a single line. Such a structure is instead typical for laser beams in the violet or ultra-violet wavelength field.

NS is intended as the number of spots exposed for each clock line, PE is intended as the helix pitch and DS is intended as the distance between spots expressed in mm for achieving a determined exposure resolution. Hence, it results that:

$$PE = NS * DS$$

To the term pitch, two different meaning are ascribed according to the technology which is referred to: in the thermal technology (infrared), wherein the head is composed by a laser source array, the pitch is the distance between the spot exposed on the plate by a source and the spot exposed by the source immediately following or preceding.

In the violet or ultra-violet wavelength technology, the pitch is the distance between the spot exposed by the single laser beam deflected according to a determined angle and the spot exposed by applying the nearest deflection angle, greater or lower.

Discretized pitch is intended as the ratio between the pitch and the distance between the spots for obtaining a certain exposure resolution.

The plates are punched to provide, at the plate edge, more than one hole for the loading of the plate on the drum, to have the plate correctly positioned on the drum with respect to the exposure head.

Particularly in connection with the thermal technology, the problems of the thermal head exposure algorithm are bound to the pitch thereof, because it is not equal to the distance which should be measured between two adjacent spots (10 $\mu$m), but at a distance very higher (generally, from 550 to 650 $\mu$m). To solve this problem, the algorithm schedules that the laser head begins to expose starting from the last diode. Last diode is intended as the diode nearest to the drum centre, when the laser head is placed in its own starting position along the linear guide.

For each drum rotation, the head travels a distance equal to the helix pitch which, for the thermal head with 64 diodes, is 640 $\mu$m. During the rotation, the 64 diodes expose 64 columns of the image, with a distance between two columns exposed by two adjacent diodes equal to the pitch. After two drum rotations, the same diode exposes two column at a distance equal to the helix pitch, i.e. 640 $\mu$m. The intermediate space is exposed by the other 63 diodes, whose helices are combined to form a homogeneous image.

In order that the helices produced by all the diodes never overlap to each other and, at the same time, without leaving non-exposed spaces, it is required that the discretized pitch and the number of the head beams are coprime, i.e. they have no common factor other than the number one.

If this condition is fulfilled, hence the combination follows a pattern depending upon the pitch and the diode number. Considering an exemplificative pattern, in case of a hypothetical laser head having 10 diodes and a pitch of 70 $\mu$m: 10- 3- 6- 9- 2- 5- 8- 1- 4- 7-. In this case, the image is ideally divided strips, each of 10 columns. One diode is assigned to each column. The diodes are numbered from the first to the last.

In this case, wishing to achieve a 2540 dpi resolution and hence a distance of 10 $\mu$m between the spots, the helix pitch has to be 100 $\mu$m. Further, the discretized pitch (= 7) and the diode number (= 10) are coprime:

hence no overlapping will occur during the exposure.

In connection with a sort function, A is defined as the bit array composing the image and $a_{i,j}$ as a generic element of the array A, where i and j are the bit row index and the bit column index inside the image respectively.

B is defined as the bit array composing the sorted data for the data feeder buffer and $b_{1,m}$ as the generic element of this array, where 1 and m are the line clock index and the spot index respectively.

FO indicates the sort function defined as follows:

$$FO(i,j) = [l,m]$$

The FO function, therefore receiving the position of the bit inside the image as input, provides the position thereof in the buffer as output, i.e. at which line clock index, in other words "when", the bit has to be delivered, and at which diode, or at which deflection angle, the bit has to be transmitted.

The sort function is therefore that function putting into a relationship the indexes of a bit inside an image array with the corresponding buffer indexes of the feeder. In the thermal technology the sort function involves three steps:

* generation of a reciprocity pattern between the image columns and the head diodes;

* assignment of each image column to a diode, and hence determination of the reciprocity between the image column indexes and the column indexes of the sorted buffer;

* determination of the chronological order of the data delivery to the head, and hence the reciprocity between the image row indexes and the row indexes of the sorted buffer.

Once the sorted buffer is generated, it is required that the latter is delivered to the data feeder which has to be equipped with a sufficiently large memory, because it is requested that a part of the memory can contain the file to be exposed and another half the subsequent file, for avoiding that the data transfer influences the productivity, where productivity is intended as the plate amount which the machine can expose in one hour.

Of course, such requirement is not narrow when single file blocks are transferred instead of the whole file, with a slightly minor performance.

The data feeder further comprises two counter registries:

* a first counter counting each line clock, this first counter provides the precise position of the drum cycling at each drum rotation from 1 to the maximum line number of the drum itself, of course the maximum line number depending upon the drum size;
* a second counter counting each pulse delivered from the feeder to the step motor of the linear unit driving the head. This counter provides the precise positioning of the laser head but a possible error due to the head supporting slide.

The reason why it is useful to implement said counters lies in the possibility of determining, by two coordinates, the position of any image spot.

The data delivery to the laser head occurs row-by-row, i.e. one array row is delivered to the head at each line clock pulse.

The values of the first counter at which the feeder has to start and stop the exposure of each column are stored in two variables pre-set at the initialization stage of the exposure. Such variables are computed taking into account the following factors: the upper margin (MS) set by the user and the plate format, particularly the length thereof.

The values of the second counter at which the feeder has to start and stop the exposure of each column are stored in two variables pre-set at the initialization stage of the exposure. Such variables are computed taking into account the following factors: the distance to be travelled by the head to be placed from the starting position to the vertical edge of the plate and the left margin. Both these parameters are set by the user.

To the above disclosed exposure head a man skilled in the related art, to achieve further and contingent needing, can introduce several additional changes and variations, all of them anyway embraced within the protection scope of the present invention, as defined by the annexed claims.

## Claims

1. Exposure head having a high number of laser beams generating helices on the surface of a photosensitive plate arranged on the outer surface of a rotating cylindrical drum, wherein:

   * helix pitch is intended as the shifting of the exposure head on a respective linear guide for each drum rotation;
   * spot is intended as the photosensitive plate surface exposed to a single laser beam;
   * pitch is intended as the distance between two spots generated by two adjacent laser beams;
   * discretized pitch is intended as the ratio between pitches and the spot distance for having a determined exposure resolution, where the product of said spot distance and the number of the spots generated by the head is equal to the helix pitch;

and wherein the discretized pitch and the number of the head laser beams are coprime, i.e. they have no common factor other than the number one.

2. Exposure head according to claim 1, wherein a data feeder is provided to the laser sources through a buffer, and wherein:

   * A is defined as the bit array composing the image and $a_{i,j}$ as a generic element of the array A, where i and j are the bit row index and the bit column index inside the image respectively;
   * B is defined as the bit array composing the sorted data for the data feeder buffer and $b_{1,m}$ as the generic element of this array, where 1 and m are the line clock index and the spot index respectively,

being provided a sort function (FO) as follows:

$$FO(i, j) = [l, m]$$

putting into a relationship the indexes of a bit inside an image array with the corresponding buffer indexes of the feeder.

3. Exposure head according to claim 2, wherein the sort function involves three steps:

   * generation of a reciprocity pattern between the image columns and the head diodes;
   * assignment of each image column to a diode, and hence determination of the reciprocity between the image column indexes and the column indexes of the sorted buffer;
   * determination of the chronological order of the data delivery to the head, and hence the reciprocity between the image row indexes and the row indexes of the sorted buffer.

4. Exposure head according to claim 3, wherein the data feeder is equipped with a sufficiently large memory to contain two sorted TIF file, in order that a part of the memory can contain the file to be exposed and another half the subsequent file.

5. Exposure head according to claim 3, wherein the data feeder further comprises two counter registries:

   * a first counter counting each line clock, this first counter provides the precise position of the drum cycling at each drum rotation from 1 to the maximum line number of the drum itself, of course the maximum line number depending upon the drum size;

\* a second counter counting each pulse delivered from the feeder to the step motor of the linear unit driving the head. This counter provides the precise positioning of the laser head but a possible error due to the head supporting slide.

6. Exposure head according to claim 5, wherein the values of the first counter at which the feeder has to start and stop the exposure of each column are stored in two variables pre-set at the initialization stage of the exposure, such variables being computed taking into account the following factors: the upper margin (MS) set by the user and the plate format, particularly the length thereof.

7. Exposure head according to claim 5, wherein the values of the second counter at which the feeder has to start and stop the exposure of each column are stored in two variables pre-set at the initialization stage of the exposure, such variables being computed taking into account the following factors: the distance to be travelled by the head to be placed from the starting position to the vertical edge of the plate and the left margin. Both these parameters are set by the user.

**European Patent Office**

**EUROPEAN SEARCH REPORT**

Application Number

EP 07 42 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 211 882 A (DAINIPPON SCREEN MFG [JP]) 5 June 2002 (2002-06-05) | 1 | INV. H04N1/00 B41J2/00 |
| Y | * paragraphs [0056] - [0085]; figures 1,8,9,11,12 * | 2-6 | |
| Y | US 2003/179279 A1 (UEMURA TAKAYUKI [JP]) 25 September 2003 (2003-09-25) * paragraphs [0104] - [0107], [0118], [0119]; figures 8-10 * | 2-6 | |
| A | EP 1 294 171 A (FUJI PHOTO FILM CO LTD [JP]) 19 March 2003 (2003-03-19) * paragraphs [0021] - [0023], [0026], [0028] * | 1-6 | |
| A | EP 1 047 260 A (KANEDA KIKAI SEISAKUSHO KK [JP]) 25 October 2000 (2000-10-25) * paragraphs [0033], [0043], [0045]; figure 13 * | 1-6 | |
| A | EP 0 930 773 A (TOKYO SHIBAURA ELECTRIC CO [JP]) 21 July 1999 (1999-07-21) * the whole document * | 1-6 | TECHNICAL FIELDS SEARCHED (IPC) H04N B41J |
| A | EP 0 918 255 A (KANEDA KIKAI SEISAKUSHO KK [JP]) 26 May 1999 (1999-05-26) * paragraphs [0028], [0030], [0043], [0054] * | 1-6 | |
| A | EP 1 604 823 A (SEIKO EPSON CORP [JP]) 14 December 2005 (2005-12-14) * paragraphs [0051], [0059] * | 1-6 | |

The present search report has been drawn up for all claims

| Place of search | Date of completion of the search | Examiner |
|---|---|---|
| Munich | 22 November 2007 | FORABOSCHI, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 998 544 A1

**ANNEX TO THE EUROPEAN SEARCH REPORT
ON EUROPEAN PATENT APPLICATION NO.**                    EP 07 42 5338

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2007

| Patent document cited in search report | | Publication date | Patent family member(s) | | Publication date |
|---|---|---|---|---|---|
| EP 1211882 | A | 05-06-2002 | JP | 3416643 B2 | 16-06-2003 |
| | | | JP | 2002166615 A | 11-06-2002 |
| | | | US | 2002064317 A1 | 30-05-2002 |
| US 2003179279 | A1 | 25-09-2003 | NONE | | |
| EP 1294171 | A | 19-03-2003 | DE | 60210717 T2 | 28-09-2006 |
| | | | JP | 2003080762 A | 19-03-2003 |
| | | | US | 2003090560 A1 | 15-05-2003 |
| EP 1047260 | A | 25-10-2000 | CA | 2269729 A1 | 22-10-2000 |
| | | | JP | 2905762 B2 | 14-06-1999 |
| | | | JP | 11133620 A | 21-05-1999 |
| | | | KR | 20000034641 A | 26-06-2000 |
| | | | TW | 418157 B | 11-01-2001 |
| | | | US | 6151099 A | 21-11-2000 |
| EP 0930773 | A | 21-07-1999 | CN | 1238475 A | 15-12-1999 |
| | | | DE | 69927068 D1 | 13-10-2005 |
| | | | DE | 69927068 T2 | 13-07-2006 |
| | | | JP | 11202229 A | 30-07-1999 |
| | | | US | 6208367 B1 | 27-03-2001 |
| EP 0918255 | A | 26-05-1999 | CA | 2254234 A1 | 20-05-1999 |
| | | | IL | 127030 A | 06-12-2000 |
| | | | JP | 2905764 B2 | 14-06-1999 |
| | | | JP | 11153873 A | 08-06-1999 |
| | | | TW | 403832 B | 01-09-2000 |
| | | | US | 6081316 A | 27-06-2000 |
| EP 1604823 | A | 14-12-2005 | CN | 1717328 A | 04-01-2006 |
| | | | WO | 2004080719 A1 | 23-09-2004 |
| | | | JP | 3856046 B2 | 13-12-2006 |
| | | | US | 2006012621 A1 | 19-01-2006 |

EPO FORM P0459

For more details about this annex : see Official Journal of the European Patent Office, No. 12/82